# EUROPEAN PATENT APPLICATION

(11) **EP 1 204 039 A2**
(43) Date of publication of application: **08.05.2002**
(21) Application number: 01308384.5
(22) Date of filing: 01.10.2001
(51) Int. Cl.: G06F 17/30

(54) **Database query method for low-bandwidth environments**

(30) Priority: 30.09.2000 GB 0023989
(71) Applicant: HEYWOOD WILLIAMS LIMITED, Huddersfield, West Yorkshire HD3 3AR (GB)
(72) Inventor: Tyers, Graham, Heywood Williams Limited, Huddersfield HD3 3AR (GB)
(74) Representative: Robinson, Ian Michael

(57) **Abstract**

A query method for use in low-bandwidth transmission networks such as the internet or WAP divides a database (30) into a layered tree structure (301, 302, 303) and provides successive web pages representing each layer of the structure, tailored according to user choices at each previous layer. The method is particularly applicable to the glazing industry, where a database of pricing information (3) is divided into a first layer (301) representing a glazing category, a second layer (302) representing a product type within each category, and a third layer (303) representing product details for each product type in each glazing category. As the user navigates each layer of the structure, a database element is extracted, and a database query result such as price information for a wide variety of products can be extracted from the database quickly and simply by combining the extracted database elements.

## Description

The present invention relates in general to a method for querying a database over a low-bandwidth transmission network, and to a database server apparatus employing the same.

Most user connections to the internet take place over a relatively low-bandwidth transmission network, such as an analogue telephone line of a public switched telephone network. Realistic data transmission rates in this environment are of the order of 5 to 10Kb/s. Hence, it is desired to minimise bandwidth-intensive network traffic.

A problem arises in that database interrogation requires a relatively large quantity of data to be transmitted from the user to a remote server prior to performance of the query at the server. Further, the user must wait whilst the query is performed at the server and the result transmitted to the user. In a typical situation, a form is downloaded to the user as a web page, and the user completes the required fields with their data. The completed form is uploaded to the server and the user data extracted to perform the database query. Therefore, considerable quantities of data must be transmitted in a relatively short space of time, whilst data transmission is minimal during other periods when, for example, the user fills in the form.

An aim of the present invention is to provide an improved database query method for use in low-bandwidth transmission environments, and to provide a database server apparatus employing the same. Preferred embodiments of the invention aim to provide such a method and apparatus for use in an internet environment.

According to the present invention there is provided a database query method for use in a low-bandwidth transmission environment, comprising the steps of:
(a) dividing a database into a layered structure;
(b) providing a web page representing a first layer of the structure and receiving a first user choice;
(c) extracting a first database element based upon the first user choice;
(d) providing a second web page representing a second layer of the structure according to the first user choice and receiving a second user choice;
(e) extracting a second database element based upon the second user choice; and
(f) combining the first and second database elements to provide a database query result.

Also according to the present invention there is provided a database query apparatus, comprising a remote server apparatus coupleable by a low-bandwidth transmission environment to at least one user apparatus, wherein the remote server apparatus is arranged to perform the steps of the method defined herein.

Preferably, the database structure has two or more layers, suitably three or four layers. Here, the steps, (d) and (e) are repeated for each subsequent layer in the structure, until a complete database query result can be provided by combining each of the extracted database elements. Preferably, the layered structure is a tree structure.

Advantageously, by dividing the database into a layered structure and displaying at least two separate web pages, data downloaded to the user is spread over a longer period and requires lower transmission bandwidth. Further, by extracting database elements in response to user choices at each stage, processing requirements at the server are also spread over a longer time period. Combining the extracted database elements can take place relatively quickly, such that the database query result is provided soon after receiving the final user choice.

For a better understanding of the invention, and to show how embodiments of the same may be carried into effect, reference will now be made, by way of example, to the accompanying diagrammatic drawings in which:
Figure 1 is a schematic view of a low-bandwidth transmission environment; and
Figure 2 is a schematic representation of a layered database employed in a preferred embodiment of the present invention.

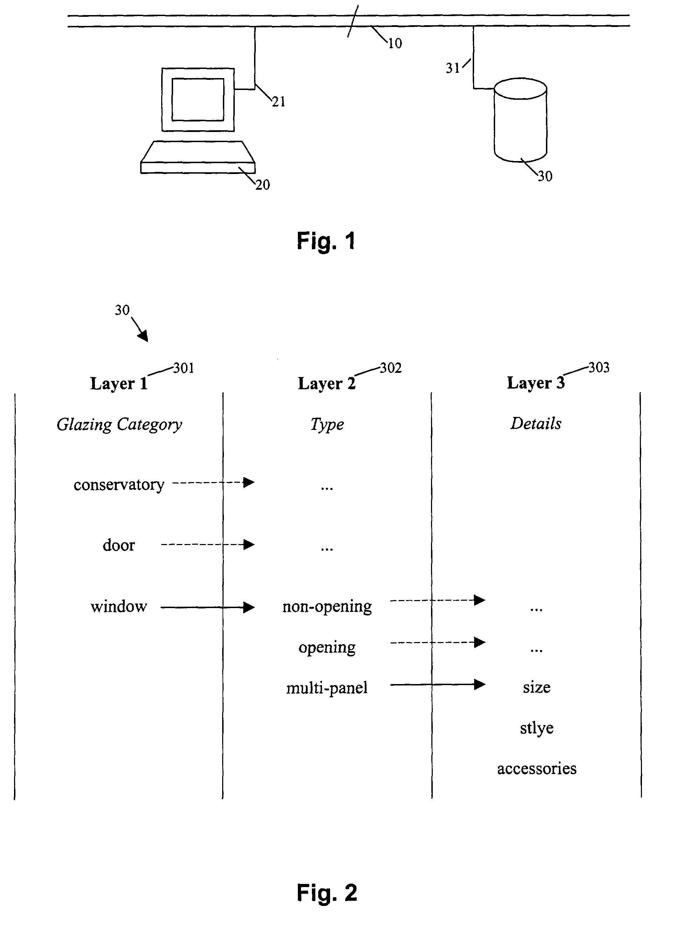

Referring to Figure 1, preferred embodiments of the present invention are intended for use particularly in the context of transmissions over the internet 10 between a user apparatus 20 and a remote server apparatus 30. Typically, the remote server 30 is coupled to the internet 10 via a high bandwidth transmission link such as ISDN or a kilostream link 31. However, the user connection is usually a much lower bandwidth such as an analogue line 21 of a PSTN. In another example embodiment the user equipment 20 is a WAP cellular telephone communicating over a wireless cellular telephony link 21. It is desired to perform a query of a database held on the server 30 using query elements supplied from the user 20. Traditionally, a structured query language such as SQL is used to interrogate the server database 30, using a compound statement. However, this requires that all elements of the query are present at the server before any processing of the query can take place.

Referring to Figure 2, a preferred embodiment of the present invention will now be described with reference to a database of pricing information for a common commercial product. In this example, the pricing information relates to glazing products such as conservatories, doors and windows for buildings. A shown in Figure 2, the price information database 30 is divided into a layered structure, in this example including three layers 301, 302 and 303. The first layer 301 divides the database into three glazing categories such as, for example, conservatory, door or window. The second layer 302 further divides each of these categories. As illustrated, the window category of the first layer 301 is divided into non-opening, opening and multi-panel types in the second layer 302. The third layer 303 further divides each entry in the second layer. In this example, the third layer concerns appropriate information such as the size of the window (square area), the style (e.g. Georgian leaded effect) and accessories (e.g. chrome handles). Whilst the preferred embodiment has been illustrated using three layers, additional layers may be provided as desired to further sub-divide the database. In this example, the database is divided into a tree structure.

Next, the operation of performing a query of the database will be described. A first web page is downloaded from the server 30 to the user 20 showing information appropriate to the first layer 301, and a first user choice is received, for example selecting between conservatory, door or window categories. The first user choice is employed at the server 30 to extract a first database element from the database. Meanwhile, a second web page is downloaded to the user 20 displaying information appropriate to the second layer 302. The content of the second web page is determined according to the user choice of the first layer 301. Only three sub-divisions are shown in the second layer 302 illustrated in Figure 2, but many more sub-divisions may be provided as appropriate. Again, a user choice is returned to the server 30 in response to the second web page and the second user choice is employed to extract a second database element. Next, a third web page with information about the third layer 303 is downloaded to the user 20, again tailored to the user choices at the second level, and optionally taking account of user choices at any previous level. That is, the content of the third layer 303 is tailored according to the user choices at both the second layer 302 and the first layer 301, as appropriate. In this example, the third layer requests the user to input product details appropriate to a multi-panel window. These third user choices are returned to the server 30 and used to extract a third set of database elements. Finally, each of the extracted database elements is combined to provide a database query result.

In the example embodiment, the first database element is a gradient modifier value representing a price value per unit area. The second database element extracted in response to the second user choice adds a second price element based upon the window type, or a variable price modifier. The third database element extracted from the third user choices completes a price equation. Therefore, pricing information for a wide variety of products can be extracted from the database quickly and simply, by extracting separate database elements at each stage.

By dividing the database into layers and extracting database elements in response to user choices at each stage, a database query is performed over a low-bandwidth transmission link whilst avoiding delays during the transmission of data in bulk. Further, the query is combined from separate query elements, thus avoiding a long delay at the server during query processing.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A database query method for use in a low-bandwidth transmission environment, comprising the steps of:
(a) dividing a database (30) into a layered structure;
(b) providing a web page representing a first layer (301) of the structure and receiving a first user choice;
(c) extracting a first database element based upon the first user choice;
(d) providing a second web page representing a second layer (302) of the structure according to the first user choice and receiving a second user choice;
(e) extracting a second database element based upon the second user choice; and
(f) combining the first and second database elements to provide a database query result

2. The method of claim 1, wherein the steps (d) and (e) are repeated for each subsequent layer (303) in the structure, until a complete database query result can be provided.

3. The method of claim 1 or 2, wherein the layered structure is a tree structure.

4. The method of claim 1, 2 or 3, wherein the database (30) holds pricing information relating to glazing products, and the database is divided into a layered tree structure including at least three layers (301, 302, 303).

5. The method of claim 4, wherein the first layer (301) divides the database by glazing categories, wherein the second layer (302) divides the database into product types within each glazing category, and wherein the third layer (303) represents product details appropriate to the product type and product category selected in the second and first layer (301, 302), respectively.

6. The method of claim 5, wherein the first database element is a gradient modifier value representing a price value per unit area for a glazing category, the second database element is a second price element representing a price value modifier according to a product type, and a third database element is a fixed-price element representing product details for each glazing category and product type.

7. A database query apparatus, comprising:
a remote server apparatus (30) coupleable by a low-bandwidth transmission environment (10) to at least one user apparatus (1), wherein the remote server apparatus (30) is arranged to perform the steps of:
(a) dividing a database into a layered structure;
(b) providing a web page representing a first layer (301) of the structure and receiving a first user choice;
(c) extracting a first database element based upon the first user choice;
(d) providing a second web page representing a second layer (302) of the structure according to the first user choice and receiving a second user choice;
(e) extracting a second database element based upon the second user choice; and
(f) combining the first and second database elements to provide a database query result.
